Europäisches Patentamt

European Patent Office

Office européen des brevets

(11) Veröffentlichungsnummer : **0 067 239**
**B1**

# (12) EUROPÄISCHE PATENTSCHRIFT

(45) Veröffentlichungstag der Patentschrift :
**09.10.85**

(51) Int. Cl.⁴ : **F 16 J 15/00**

(21) Anmeldenummer : **81104579.8**

(22) Anmeldetag : **13.06.81**

(54) **Dichtungsanordnung bei Spaltdichtungen an hydrostatisch gelagerten Kolbenstangen von hydraulischen Belastungszylindern.**

(43) Veröffentlichungstag der Anmeldung :
**22.12.82 Patentblatt 82/51**

(45) Bekanntmachung des Hinweises auf die Patenterteilung : **09.10.85 Patentblatt 85/41**

(84) Benannte Vertragsstaaten :
**CH DE FR GB LI**

(56) Entgegenhaltungen :
**CH-A- 398 218**
**DE-B- 1 080 570**
**GB-A- 2 054 067**
**Patents Abstracts of Japan, Band 4, Nr. 123, 30. August 1980, Seite 10M29**

(73) Patentinhaber : **CARL SCHENCK AG**
**Landwehrstrasse 55 Postfach 40 18**
**D-6100 Darmstadt (DE)**

(72) Erfinder : **Pohl, Andreas, Ing. grad.**
**Am Herrenhof 9**
**D-6102 Pfungstadt 2 (DE)**
Erfinder : **Hintz, Gerhard, Ing. grad.**
**Holzgasse 44**
**D-6101 Rossdorf (DE)**
Erfinder : **Keller, Günter, Ing. grad.**
**Am Felsenkeller 47**
**D-6101 Modautal 1 (DE)**
Erfinder : **Wassiluk, Leopold**
**An der Fuchsenhütte 90**
**D-6101 Rossdorf (DE)**
Erfinder : **Zuber, Günter**
**Berliner Strasse 16**
**D-6101 Messel (DE)**

(74) Vertreter : **Brand, Fritz, Dipl.-Ing.**
**Carl Schenck AG Patentabteilung Landwehrstrasse 55 Postfach 4018**
**D-6100 Darmstadt (DE)**

**Beschreibung**

Die Erfindung betrifft eine Dichtungsanordnung bei Spaltdichtungen an hydrostatisch gelagerten Kolbenstangen von hydraulischen Belastungszylindern, bei der an der Spaltdichtung eine Absaugvorrichtung zur Abführung des durch die Spaltdichtung hindurchtretenden Druckmittels (Leckfluß) angeordnet ist.

Bei hydraulischen Belastungszylindern werden die Kolbenstangen oft hydrostatisch gelagert bzw. geführt, um bei Betrieb des Zylinders möglichst geringe Reibungskräfte zu erzeugen und um an der Kolbenstangenlagerung auch Querkräfte aufnehmen zu können. Die hydrostatischen Lager werden meist durch Spaltdichtungen nach außen abgedichtet. Bei Dichtanordnungen mit Spaltdichtungen können Absaugvorrichtungen vorgesehen werden, die dafür sorgen, daß das durch die Spaltdichtung hindurchtretende Druckmittel (der Leckfluß) während des Betriebs des Zylinders abgesaugt wird. Dazu wird das Druckmittel z. B. in einer Nut oder in einem Raum am Ende der Spaltdichtung gesammelt und über eine Leitung und eine geeignete Pumpvorrichtung in einen Vorratsbehälter gepumpt. Auf diese Weise werden Druckmittelverluste sowie eine Verschmutzung der Vorrichtung vermieden. Nach Abschaltung des Zylinders und der Absaugvorrichtung besteht jedoch die Gefahr, daß weiterhin Druckmittel durch die Lagerspalte der Spaltdichtung nach außen tritt.

Es ist Aufgabe der vorliegenden Erfindung, die bekannte Dichtungsanordnung so zu verbessern, daß ein Austritt von Druckmittel aus der Spaltdichtung bzw. der Dichtungsanordnung auch nach der Abschaltung der Absaugvorrichtung bei Stillstand der Anlage vermieden wird. Bei Betrieb des Belastungszylinders soll jedoch durch die zu treffenden Maßnahmen keine zusätzliche Reibung auftreten. Diese Aufgabe wird durch die in den Patentansprüchen angegebenen Merkmale gelöst. Die Ansprüche enthalten auch Ausgestaltungen der Erfindung.

Aus der JP-A-55-78 859 ist eine Dichtungsanordnung für eine Welle bekannt, die aus einer Vakuumkammer herausgeführt ist, und bei der eine Spaltdichtung und eine nachgeschaltete Berührungsdichtung vorgesehen ist. Die Dichtungsanordnung soll verhindern, daß sowohl bei drehender als auch bei stillstehender Welle Umgebungsluft von außen durch die Spaltdichtung in die Vakuumkammer eindringt. Die Berührungsdichtung besteht aus einem ringförmigen, hohlen Dichtelement, dem zur Zuschaltung der Dichtung Druckluft zugeführt wird, so daß es sich aufweitet und an die abzudichtende Welle anlegt. Bei der beanspruchten Anordnung wird jedoch die Dichtwirkung der zusätzlichen Dichtung durch Zuführung eines Druckmittels aufgehoben. Bei Verwendung der bekannten Anordnung würde bei Stillstand der Anlage eine besondere Druckmittelversorgungseinrichtung bzw. Energie benötigt, um eine Dichtwirkung zu erzeugen. Bei der vorliegenden Erfindung soll dies jedoch gerade vermieden werden.

Durch die erfindungsgemäßen Vorschläge wird eine sichere Abdichtung an der Spaltdichtung auch bei Stillstand des Belastungszylinders gewährleistet. Dabei ist es nicht notwendig, daß die vorhandene Absaugvorrichtung ständig eingeschaltet bleibt. Andererseits wird eine zusätzliche herkömmliche Dichtung vermieden, die bei Betrieb Reibung und damit unerwünschte Kräfte erzeugt und die das Dämpfungsverhalten der Anordnung (des Belastungszylinders) beeinflussen kann. Durch die Erfindung wird auch der bei herkömmlichen Dichtungen auftretende Verschleiß vermieden.

Zur Realisierung der Erfindung sind verschiedene konstruktive Lösungen möglich. Einige Ausführungsbeispiele sind in den Zeichnungen dargestellt und in der Beschreibung näher erläutert. Die Figuren zeigen in schematischer Darstellung einen hydraulischen Belastungszylinder mit Spaltdichtung für die Kolbenstange, Absaugvorrichtung an der Spaltdichtung und einer zusätzlichen betätigbaren Dichtung, die in den einzelnen Figuren wie folgt ausgebildet ist:

Figur 1 als elastisch vorgespannter Ringfaltenbalg,

Figur 2 als O-Ring mit U-ringförmigen Federelement und einem schlauchringförmigen Betätigungselement,

Figur 3 als O-Ring mit einem über eine elastische Ringscheibe wirkenden Nutring oder Ringkolben als Betätigungselement,

Figur 4 als O-Ring mit Ringkolben und Tellerfeder.

Auf der linken Seite der Figuren ist die betätigbare Dichtung jeweils im eingeschalteten, auf der rechten Seite im ausgeschalteten Zustand (Dichtung nicht wirksam) dargestellt.

Die Figuren zeigen einen hydraulischen Belastungszylinder 1 mit einem Kolben 2, einer Zylinderkammer 3 und einer nach außen geführten Kolbenstange 4. Die Kolbenstange kann auch auf beiden Seiten des Kolbens bzw. Zylinders nach außen geführt sein. Einzelheiten der Druckmittelzuführung und der Steuerung des Zylinders sind nicht dargestellt.

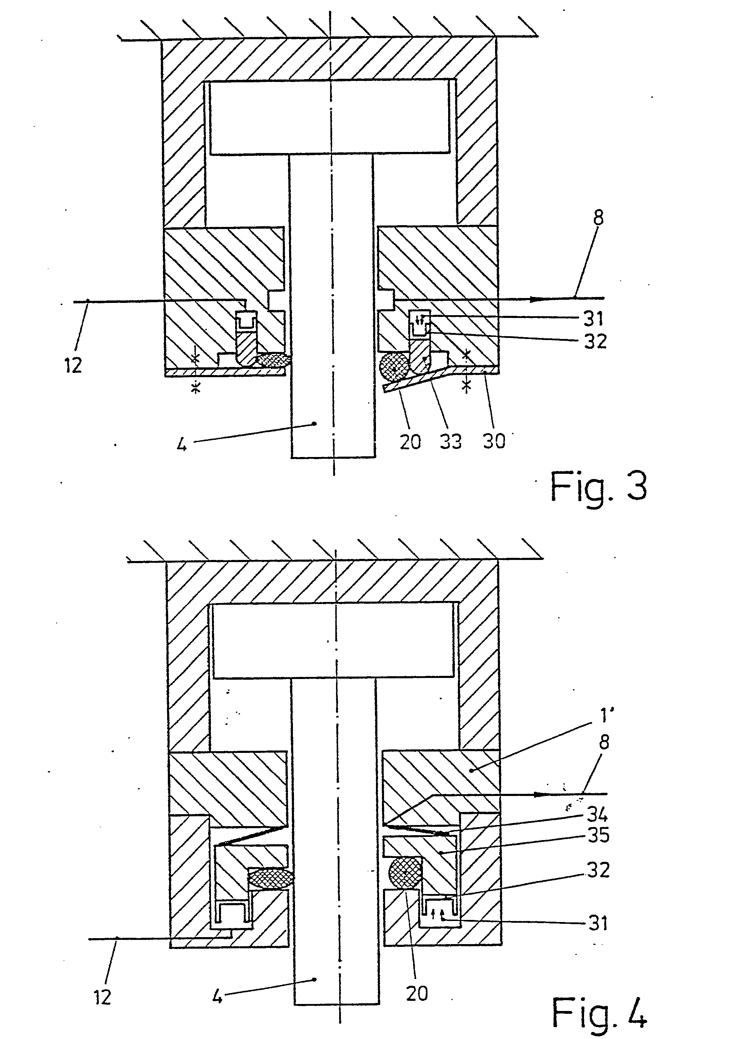

Die Kolbenstange 4 ist im Zylinderdeckel 1' des Zylinders 1 mit sehr kleinem Spiel geführt. Der zwischen Zylinderdeckel 1' und der Kolbenstange 4 vorhandene schmale Spalt bildet eine Spaltdichtung 5, die die Zylinderkammer bzw. eine Lagerstelle an der Kolbenstangendurchführung gegen die Atmosphäre abdichtet. Das aus der Zylinderkammer 3 bzw. aus einem im Zylinderdeckel 1' angeordneten und aus Gründen der Übersichtlichkeit nicht dargestellen hydrostatischen Lager durch die Spaltdichtung 5 tretende Druckmittel wird am Ende der Spaltdichtung in einer Absaugnut 6 oder in einem Raum hinter der Spaltdichtung (Fig. 4) gesammelt und von einer Pumpe 7 über eine Leitung 8 einen Vorratsbehälter 9 gepumpt. Dadurch wird vermieden, daß Druckmittel durch die Spaltdichtung 5 nach außen tritt. Die bisher beschriebene Anordnung ist bei allen Figuren etwa gleich ausgebildet.

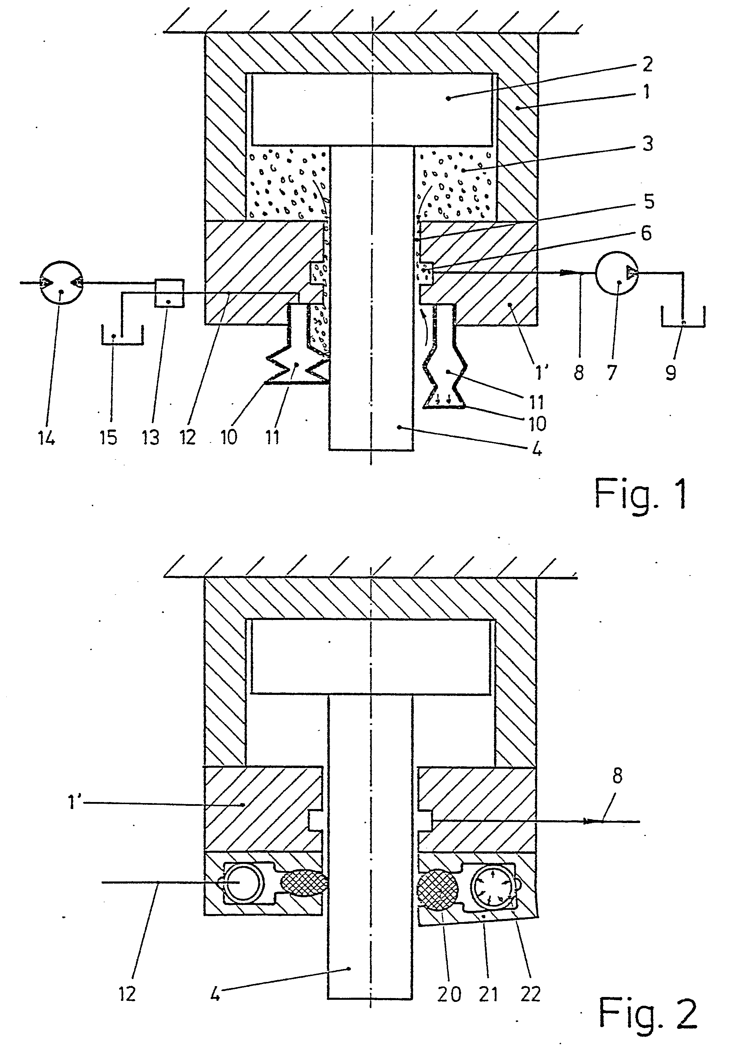

Die hinter der Spaltdichtung 5 angeordnete zusätzliche betätigbare Dichtung ist in Fig. 1 als Ringfaltenbalg 10 ausgebildet. Der Ringfaltenbalg ist an seinem offenen Ende am Zylinderdeckel 1' druckmitteldicht befestigt. Der Innenraum 11 des Balges ist über eine Leitung 12 und ein Umschaltventil 13 mit einer geeigneten Druckmittelquelle 14 (schematisch als Pumpe dargestellt) verbunden. Von dieser Druckmittelquelle kann der Innenraum 11 des Faltenbalgs 10 mit einem Druckmittel beaufschlagt werden. Durch Umschalten des Ventils 13 kann das im Ringfaltenbalg 10 vorhandene Druckmittel in einen Vorratsbehälter 15 zurückgeleitet und der Ringfaltenbalg in seine Ruhelage zurückgeführt werden.

Im Ruhezustand, d. h. bei nicht betätigter Dichtung, ist der Ringfaltenbalg 10 elastisch vorgespannt, wie auf der linken Seite der Fig. 1 schematisch dargestellt. Die Vorspannung kann durch die Balgform gegeben sein. Sie kann auch durch eingelegte Federn erzeugt oder durch Federelemente unterstützt werden. Im Ruhezustand ist der Innendurchmesser des Faltenbalgs 10 kleiner als der Außendurchmesser der Kolbenstange 4, so daß der Faltenbalg abdichtend an der Kolbenstange anliegt. Dadurch wird verhindert, daß Druckmittel aus der Spaltdichtung 5 nach außen tritt.

Wenn der Belastungszylinder 1 in Betrieb gesetzt werden soll, wird zunächst der Innenraum 11 des Ringfaltenbalgs 10 von der Druckmittelquelle 14 über das Umschaltventil 13 in geeigneter Weise mit Druckmittel beaufschlagt. Hierfür kann das Druckmittel verwendet werden, das auch zur Betätigung des Zylinders bzw. des Kolbens dient. Die Umschaltung des Ventils 13 kann zweckmäßigerweise auch automatisch mit der Ein- und Ausschaltung des Belastungszylinders 1 erfolgen. Dadurch wird die Bedienung vereinfacht und die Betriebssicherheit erhöht.

Durch die Beaufschlagung mit einem Druckmittel verformt sich der Ringfaltenbalg 10 durch den auf seine geschlossene Stirnfläche wirkenden Druck (s. Pfeile) in axialer Richtung in der auf der rechten Seite von Fig. 1 schematisch dargestellten Weise. Der Innendurchmesser des Faltenbalgs vergrößert sich. Er liegt dadurch nicht mehr an der Kolbenstange 4 an und die Dichtwirkung des Balges ist aufgehoben. Das durch die Spaltdichtung 5 tretende Lecköl wird durch die Absaugpumpe 7 abgesaugt, so daß es nicht nach außen treten kann. Die beschriebene Anordnung mit einer betätigbaren Dichtung hat auch den Vorteil, daß zur Aufrechterhaltung der Dichtwirkung bei abgeschalteter Anlage keine angetriebene Vorrichtung bzw. keine Energie erforderlich ist.

Die Figuren 2-4 zeigen Ausführungsbeispiele einer zusätzlichen betätigbaren Dichtung mit einem O-Ring 20. In Fig. 2 wird der O-Ring 20 in einem nach innen offenen U-ringförmigen Federelement 21 aufgenommen. Das Federelement 21 ist in geeigneter Weise am Zylinderdeckel 1' angebaut. Im Federelement ist in geringem radialen Abstand zum O-Ring 20 ein elastisches, durch ein Druckmittel aufweitbares Schlauchringelement 22 angeordnet. Im entspannten Zustand bzw. im Ruhezustand der Anordnung drückt das elastisch vorgespannte Federelement 21 den O-Ring 20 in axialer Richtung zusammen. Dadurch ergibt sich eine Verkleinerung des Innendurchmessers des O-Rings, der Ring legt sich an die Kolbenstange 4 an und wirkt abdichtend, wie auf der linken Seite von Fig. 2 dargestellt. Durch Beaufschlagung des elastischen Schlauchringelements 22 mit einem Druckmittel über die Leitung 12 dehnt sich das Schlauchringelement aus. Dadurch wird das U-ringförmige Federelement 21 zur Kolbenstange 4 hin aufgeweitet, der O-Ring 20 kann sich entspannen und seine Dichtwirkung ist aufgehoben.

Im Ausführungsbeispiel nach Fig. 3 wird der O-Ring 20 durch eine elastische Ringscheibe 30, die am Zylinderdeckel 1' angeordnet ist, in axialer Richtung zusammengedrückt und wirkt damit abdichtend, wie auf der linken Seite der Figur dargestellt. Durch Betätigung eines in einem Ringzylinder 31 angeordneten Nutrings 32 durch Beaufschlagung des Ringzylinders 31 mit einem Druckmittel, wird die Ringscheibe 30 an ihrem inneren Teil über den Ringkolben 33 in axialer Richtung so verformt, daß die Vorspannung des O-Rings aufgehoben wird. Der O-Ring kann sich elastisch in seine Ruhelage zurückverformen. Dabei vergrößert sich sein Innendurchmesser und die Dichtwirkung an der Kolbenstange 4 wird aufgehoben (Darstellung rechte Seite der Fig. 3).

Der Nutring 32 kann auch so ausgebildet sein, daß er unmittelbar auf die Ringscheibe 30 wirkt. Anstelle des Nutrings 32 kann im Zylinder 31 auch ein geeignet ausgebildeter Ringkolben 33 vorgesehen werden, der auf die Ringscheibe 30 wirkt.

Im Ausführungsbeispiel nach Fig. 4 ist das Federelement als Tellerfeder 34 ausgebildet. Die Tellerfeder wirkt jedoch nicht direkt, sondern über einen Zwischenring, der mit einem Ringkolben 35 verbunden ist, auf den O-Ring 20. Wenn die Zylinderkammer 31 drucklos ist, drückt die Tellerfeder 34 den O-Ring 20 über den Zwischenring in axialer Richtung zusammen. Der O-Ring legt sich an die Kolbenstange 4 an und wirkt abdichtend (Fig. 4 links). Bei Beaufschlagung des Ringzylinders 31 über die Leitung 12 wird die Tellerfeder 34 durch den Nutring 32 und den Ringkolben 35 bzw. die mit diesem verbundene Zwischenscheibe zusammengedrückt, der O-Ring 20 wird entlastet und seine Dichtwirkung aufgehoben. Das durch die Spaltdichtung zwischen dem Zylinderdeckel 1' und der Kolbenstange 4 hindurchtretende Druckmittel wird über die Leitung 8 aus dem Raum hinter der Spaltdichtung abgesaugt.

Die Betätigung der schaltbaren Dichtung mit O-Ring erfolgt durch Beaufschlagung der Betätigungselemente (Schlauchringelement 22 und Ringzylinder 31) mit einem Druckmittel, wie bei Fig. 1 beschrieben.

Bei den Ausführungen der zusätzlichen Dichtung mit O-Ring sind auch konstruktive Anordnungen möglich, bei denen der O-Ring zur Erzielung der Dichtwirkung in radialer Richtung zusammendrückbar ist und sich dadurch abdichtend an die Kolbenstange anlegt.

In einer einfachen Ausführung können für die Betätigung der schaltbaren Dichtung beispielsweise auch mechanische Stellvorrichtungen (Stellschrauben, Stellringe) vorgesehen werden, so daß die Betätigungselemente bzw. die Beaufschlagung mit einem Druckmittel entfallen kann.

**Patentansprüche**

1. Dichtungsanordnung bei Spaltdichtungen (5) an hydrostatisch gelagerten Kolbenstangen (4) von hydraulischen Belastungszylindern (1), bei der an der Spaltdichtung (5) eine Absaugvorrichtung (7-9) zur Abführung des durch die Spaltdichtung (5) hindurchtretenden Druckmittels (Leckfluß) angeordnet ist, dadurch gekennzeichnet, daß hinter der Spaltdichtung (5) eine zusätzliche betätigbare (abschaltbare) Dichtung (10, 20) angeordnet ist, daß die betätigbare Dichtung im Ruhezustand abdichtend an der Kolbenstange (4) anliegt und daß die Betätigung der Dichtung die Dichtwirkung aufhebt.

2. Dichtungsanordnung nach Anspruch 1, dadurch gekennzeichnet, daß die zusätzliche Dichtung ein hohl ausgebildetes Dichtelement (10) aufweist, dessen Innenraum (11) zur Betätigung (Abschaltung) der Dichtung mit einem Druckmittel beaufschlagbar ist.

3. Dichtungsanordnung nach Anspruch 1, dadurch gekennzeichnet, daß die zusätzliche Dichtung ein Dichtelement (20) und ein vorgespanntes Federelement (21, 30, 34) aufweist, das auf das Dichtelement (20) direkt oder indirekt einwirkt, und daß zur Betätigung (Abschaltung) der Dichtung die Einwirkung des Federelementes (21, 30, 34) auf das Dichtelement (20) durch ein Betätigungselement (22, 32, 33, 35) aufhebbar ist.

4. Dichtungsanordnung nach Anspruch 3, dadurch gekennzeichnet, daß das Betätigungselement (22, 32, 33, 35) mit einem Druckmittel beaufschlagbar ist.

5. Dichtungsanordnung nach Anspruch 2, dadurch gekennzeichnet, daß das Dichtelement (10) als ringförmiger, elastisch vorgespannter Faltenbalg (10) ausgebildet ist.

6. Dichtungsanordnung nach Anspruch 3, dadurch gekennzeichnet, daß das Dichtelement (20) als elastisch verformbarer O-ring (20) ausgebildet ist.

7. Dichtungsanordnung nach Anspruch 6, dadurch gekennzeichnet, daß der O-Ring (20) durch das Federelement (21, 30, 34) in axialer Richtung zusammendrückbar ist.

8. Dichtungsanordnung nach Anspruch 3 oder 7, dadurch gekennzeichnet, daß das Federelement (21, 30, 34) ein nach innen offenes, U-ringförmiges Element (21), eine elastische Ringscheibe (30) oder eine Tellerfeder (34) ist.

9. Dichtungsanordnung nach Anspruch 3, 4 oder 8, dadurch gekennzeichnet, daß das Betätigungselement (22, 32, 33, 35) ein Schlauchringelement (22), ein Nutring (32) oder ein Ringkolben (33, 35) ist.

10. Dichtungsanordnung nach einem der vorhergehenden Ansprüche, dadurch gekennzeichnet, daß die Abschaltung der zusätzlichen Dichtung mit der Einschaltung des Belastungszylinders (1) koppelbar ist.

11. Dichtungsanordnung nach Anspruch 1, dadurch gekennzeichnet, daß die zusätzliche Dichtung mechanisch (durch Stellschrauben, Stellringe oder dgl.) betätigbar ist.

**Claims**

1. Sealing arrangement in clearance seals (5) on hydrostatically mounted piston rods (4) of hydraulic load cylinders (1), in which a suction device (7-9) is arranged at the clearance seal (5) for the removal of the pressure medium (leakage flow) passing through the clearance seal (5), characterised in that behind the clearance seal (5) an additional operable (disengageable) seal (10, 20) is arranged, that the operable seal when in a state of rest fits against the piston rod (4) in a sealing manner and that the operation of the seal counteracts the sealing effect.

2. Sealing arrangement according to Claim 1, characterised in that the additional seal has a sealing element (10) which is of hollow construction, and the inner chamber (11) of which can be acted upon by a pressure medium to operate (disengage) the seal.

3. Sealing arrangement according to Claim 1, characterised in that the additional seal has a sealing element (20) and a prestressed spring element (21, 30, 34), which acts directly or indirectly on the sealing element (20), and that, in order to operate (disengage) the seal, the effect of the spring element (21, 30, 34) on the sealing element (20) can be counteracted through an operating element (22, 32, 33, 35).

4. Sealing arrangement according to Claim 3, characterised in that the operating element (22, 32, 33, 35) can be acted upon by a pressure medium.

5. Sealing arrangement according to Claim 2, characterised in that the sealing element (10) is constructed as an annular, elastically prestressed bellows (10).

6. Sealing arrangement according to Claim 3, characterised in that the sealing element (20) is constructed as an elastically deformable O-ring (20).

7. Sealing arrangement according to Claim 6, characterised in that the O-ring (20) is compressible in axial direction through the spring element (21, 30, 34).

8. Sealing arrangement according to Claim 3 or 7, characterised in that the spring element (21, 30, 34) is an inwardly open, U-shaped ring element (21), an elastic ring disc (30) or a plate spring (34).

9. Sealing arrangement according to Claim 3, 4 or 8, characterised in that the operating element (22, 32, 33, 35) is a hose ring element (22), a grooved ring (32) or a ring piston (33, 35).

10. Sealing arrangement according to one of the preceding claims, characterised in that the disengagement of the additional seal can be coupled with the engagement of the load cylinder (1).

11. Sealing arrangement according to Claim 1, characterised in that the additional seal is operable mechanically (through adjusting screws, adjusting rings or the like).

## Revendications

1. Agencement d'étanchéité pour boîte à labyrinthe (5) monté sur la tige de piston (4) d'un vérin hydraulique à palier hydrostatique (1), dans lequel est disposé sur la boîte à labyrinthe (5), un dispositif d'aspiration (7-9) pour évacuer le fluide de pression sortant par la boîte à labyrinthe (5), (courant de fuite), caractérisé en ce qu'on dispose derrière la boîte à labyrinthe (5) un joint supplémentaire (10, 20) pouvant être actionné (pouvant être mis hors service), que le joint actionnable à l'état de repos s'applique hermétiquement sur la tige de piston (4) et que l'actionnement du joint supprime l'effet d'étanchéité.

2. Agencement d'étanchéité selon la revendication 1, caractérisé en ce que le joint supplémentaire comporte un élément d'étanchéité creux (10) dont le volume intérieur (11) peut être alimenté en fluide de pression pour actionner le joint (mise hors service).

3. Agencement d'étanchéité selon la revendication 1, caractérisé en ce que le joint supplémentaire comporte un élément d'étanchéité (20) et un élément élastique précontraint (21, 30, 34) qui agit directement ou indirectement sur l'élément d'étanchéité (20), et que, pour actionner (mettre hors service) le joint, l'effet de l'élément élastique (21, 30, 34) sur l'élément d'étanchéité (20) peut être supprimé par un élément d'actionnement (22, 32, 33, 35).

4. Agencement d'étanchéité selon la revendication 3, caractérisé en ce que l'élément d'actionnement (22, 32, 33, 35) peut être alimenté en fluide de pression.

5. Agencement d'étanchéité selon la revendication 2, caractérisé en ce que l'élément d'étanchéité (10) est réalisé sous forme de soufflet annulaire (10) élastiquement précontraint.

6. Agencement d'étanchéité selon la revendication 3, caractérisé en ce que l'élément d'étanchéité (20) est réalisé sous forme de joint torique (20) élastiquement déformable.

7. Agencement d'étanchéité selon la revendication 6, caractérisé en ce que le joint torique (20) peut être comprimé dans le sens axial par l'élément élastique (21, 30, 34).

8. Agencement d'étanchéité selon la revendication 3 ou 7, caractérisé en ce que l'élément à ressort (21, 30, 34) est un élément en forme d'anneau en U (21) ouvert vers l'intérieur, un disque annulaire élastique (30) ou un ressort Belleville (34).

9. Agencement d'étanchéité selon la revendication 3, 4 ou 8, caractérisé en ce que l'élément d'actionnement (22, 32, 33, 35) est un élément annulaire en forme de tuyau (22), un anneau à lèvres (32) ou un piston annulaire (33, 35).

10. Agencement d'étanchéité selon l'une des revendications précédentes, caractérisé en ce que la mise hors serive du joint supplémentaire peut être couplée avec la mise en service du vérin (1).

11. Agencement d'étanchéité selon la revendication 1, caractérisé en ce que le joint supplémentaire peut être actionné mécaniquement (par des vis de réglage, des bagues de réglage ou l'analogue).

Fig. 1

Fig. 2

Fig. 3

Fig. 4